# EUROPEAN PATENT APPLICATION

(11) **EP 2 031 130 A1**
(43) Date of publication of application: **04.03.2009**
(21) Application number: 07115203.7
(22) Date of filing: 29.08.2007
(51) Int. Cl.: E01C 13/08, A01B 45/02

(54) **Method and device for improving a field, such as a field of grass**

(71) Applicant: Heijmans Infrastructuur B.V., 5248 JR Rosmalen (NL)
(72) Inventor: Meijerhof, Jacobus Cornelis, 6961 KJ Eerbeek (NL); Reulink, Frans Hendrikus, 6913 AC Aerdt (NL); Bolk, Henricus Johannes Nicolaas Antonius, 5402 LS Uden (NL)
(74) Representative: van Westenbrugge, Andries

(57) **Abstract**

A method for filling ducts (14) which open onto the surface of the ground (6), such as drainage ducts and/or aeration ducts in a field of grass, with a granular material (17), such as sand, comprising the steps of:
- providing a covering (4,5) comprising openings (15),
- arranging the covering on the ground,
- producing ducts in the ground,
- pouring granular material onto the covering,
- introducing the granular material into the openings in the covering so that it flows into the ducts.

## Description

The invention relates to the treatment of the subsoil of in particular sports fields and the like. Such fields are usually provided with turf, on which various activities take place, such as football, hockey and other sports activities, but also mass gatherings in the form of concerts and other events. During these events, the turf is regularly subjected to heavy loads and it is therefore very important to maintain it in good condition. In this connection, the problem arises that, due to the regular heavy loads to which the turf is subjected, the quality of the latter deteriorates. The subsoil is compressed to a relatively large degree, as a result of which not only the water-retaining capacity of the top layer is reduced, but also the growth rate of the grass is adversely affected. The latter is the result of the fact that the top layer becomes compacted, which makes it difficult for air to permeate the soil.

Until now, attempts at remedying these problems consisted in producing more or less vertical ducts in the subsoil. These ducts may be of any dimension and be arranged according to any kind of pattern. By way of example, a very common grid of 13 x 13 cm is mentioned here, in which the ducts may have diameters of 18 to 40 mm. The depth of these ducts may, for example, be 15 to 35 cm. It is furthermore known to use movable devices provided with a number of pins of the desired dimensions, by means of which the relevant ducts can be produced. By moving the device over the subsoil, the pins are inserted and also removed again.

A pattern of regularly distributed ducts which has been formed in this way has proven to be advantageous for both the water-retaining capacity and the quality of the turf. The roots can now be better aerated by means of these ducts, which improves the growing conditions of the turf. However, it is important in this case that the respective ducts remain intact as long as possible. In this connection, attempts have been made to fill these ducts with a granular material which, on the one hand prevents the duct walls from caving in and, on the other hand, does not greatly impede the air from permeating the soil.

In order to thus fill the ducts, the granular material, in particular sand, is poured onto the subsoil before, during or after the ducts have been produced. Then, attempts are made to make the granular material which has thus been poured flow into the ducts by means of a sweeping element, such as a net or the like. In practice, however, this method hardly works. In particular when the grass is slightly damp, the sand tends to lump together and stick to the grass blades, so that the sweeping element hardly has any effect.

It is therefore an object of the invention to provide a method of the abovementioned type in which the respective ducts can indeed be filled with a granular material in the desired manner. This object is achieved by means of a method for filling ducts which open onto the surface of the ground, such as drainage ducts and/or aeration ducts in a field of grass, with a granular material, such as sand, comprising the steps of:
- providing a covering comprising openings,
- arranging the covering on the ground,
- producing ducts in the ground,
- pouring granular material onto the covering,
- introducing the granular material into the openings in the covering so that it flows into the ducts.

With the method according to the invention, granular material is no longer distributed over the entire subsoil, in which the ducts have been produced, in a more or less arbitrary manner, but concentrated in those spots where ducts are indeed located, and subsequently introduced into these ducts. This not only ensures that all ducts are reliably filled in their entirety, but also make it possible to maintain the rest of the field in a better condition. There is no longer an excess of granular material, such as sand, on the rest of the field, which is advantageous for the quality.

As a result of the fact that the ducts are completely filled with the granular material, the water-retaining capacity is increased and the aeration of the roots is also improved. Thus, it will take less time for the turf to recover after a rain shower and it will also take less time before it is possible to walk on the turf again.

As has been mentioned before, the ducts are arranged in a regular pattern. In this connection, the method also comprises the step of using a covering having corresponding openings arranged in a regular pattern. This pattern matches the pattern of the ducts. Furthermore, the method may comprise the steps of aligning the openings with respect to the ducts, and/or moving the granular material over the covering towards the openings. This means that, in a first step, the granular material can be poured onto the covering more or less arbitrarily and that the granular material is then forced to the opening by pushing and moving it in order to be deposited in the ducts in this manner.

As the fields which are to be treated cover significant surface areas, it has to be possible to fill a large number of ducts in a reliable manner. It is possible to move the covering in each case in steps, for example by means of a suitable manipulator, such as a hydraulic arm, and to then fill the ducts which are covered. However, with the relatively large surface areas of, for example, sports fields such an embodiment of the method would be too laborious. Therefore, an embodiment of the method which is not carried out in steps, but continuously, is preferred.

According to the invention, it is possible to achieve, in addition to a stepwise embodiment of the method according to the invention, a continuous embodiment by means of the following steps:
- providing an endless covering having a bottom part and a top part,
- arranging the bottom part on the ground,
- moving the covering by rolling it over the ground.

The endless covering may be designed in many different ways, for example in the form of a caterpillar comprising parts which are hingedly connected to one another. However, it is also possible to use a covering made from a flexible material, for example rubber, which can easily be bent. The advantage of a covering of this type is that the method according to the invention can be carried out while driving over the relevant field. The speed should in this case be chosen such that the granular material does have sufficient time to fill the ducts which are being passed. Of course, this also depends on the length of the bottom part which rests on the respective subsoil. The longer this part is, the quicker the method can be carried out.

The speed with which a complete field can be treated in such a manner also depends on the width of the respective bottom parts of the covering. This width may be doubled if two parts are used next to one another, that is to say two flexible or jointed endless elements. To this end, the invention also comprises the following steps:
- providing two or more endless coverings next to one another,
- distributing the granular material over the bottom parts of the coverings.

As a multiple set of caterpillars forms a large supporting surface, a relatively heavy device can be used without the subsoil, in particular an area of turf, suffering too greatly. This also makes it possible to carry along an amount of granular material, such as sand, when carrying out the method according to the invention.

As has already been mentioned above, the ducts are produced by means of installations which are known per se and which are, for example, suspended behind a tractor. The method according to the invention can now be carried out in a very efficient manner by combining it with the provision of the ducts. This can be achieved by means of the following steps:
- producing ducts in the ground at a regular distance from one another,
- immediately thereafter pouring granular material into these ducts via the covering.

The invention furthermore relates to a device for carrying out the above-described method. This device comprises a frame which can be moved over the ground, covering means which are to be arranged on the ground, which covering means are provided with openings, positioning elements for arranging the covering means on the ground, a container for carrying along an amount of granular material, such as sand, as well as supply means for supplying the granular material from the container to the covering means, in such a way that the granular material can leave the covering means via the openings.

By means of this device, it is therefore possible to introduce the granular material, such as sand, in an efficient manner in the respective ducts in the subsoil. Preferably, the covering has a pattern of openings which corresponds to the pattern of the ducts in the respective subsoil. By now positioning the covering in such a manner that the openings are aligned with respect to the ducts, it is possible to fill the latter in a very efficient manner.

Filling the ducts with the granular material preferably has to be carried out in a continuous manner, as a result of which the speed can be increased. This continuous filling of the ducts is possible if the covering means are designed as an endless flexible element, the bottom part of which can be placed on the ground, and if the supply means are designed to supply the granular material from the container onto said bottom part. According to a preferred embodiment, two endless flexible elements are provided next to one another, the bottom part of each of which can be placed on the ground, and the supply means are designed to distribute the granular material from the container onto both bottom parts.

By using several of these flexible elements, a relatively large supporting surface is created, as a result of which the field of grass can be spared. The flexible elements can also be used for moving the device concerned along if each endless flexible element is guided around at least two supporting rollers, and the frame is supported by means of these supporting rollers.

The supply means may comprise a distributing element which is provided with a central inlet which is connected to the container as well as two chutes which extend in each case between the top and bottom parts of the endless flexible elements. In order to reliably supply the granular material to the holes when the flexible element rolls over the subsoil, a sweeping element may be provided which can be displaced over the bottom part for supplying the granular material which has been poured thereon to the openings in the bottom part. In particular, the sweeping element may be attached to the frame.

Furthermore, coupling means may be provided by means of which the device can, for example, be coupled to a tractor, in particular to a tractor to which an installation for producing ducts in the subsoil is attached. Immediately after such an installation has formed the ducts, the latter can be filled by means of the respective device which is coupled to the tractor. According to a particularly advantageous variant, by which the alignment of the openings with respect to the ducts can be ensured, the endless flexible element is designed to be driven by means of a torsion-axle, which torsion-axle can be coupled to the power take-off of the tractor.

In order to enable efficient transportation of the device according to the invention, auxiliary wheels may also be provided which are attached to the frame in such a manner that they can be moved up and down, by means of which auxiliary wheels the frame can be moved without the bottom part touching the ground.

The invention will be explained in more detail below with reference to an exemplary embodiment illustrated in the figures, in which:
Fig. 1 shows a side view of the device according to the invention;
Fig. 2 shows a rear view;
Fig. 3 shows a detail III of Fig. 1;
Fig. 4 shows a detail along line IV-IV in Fig. 1.

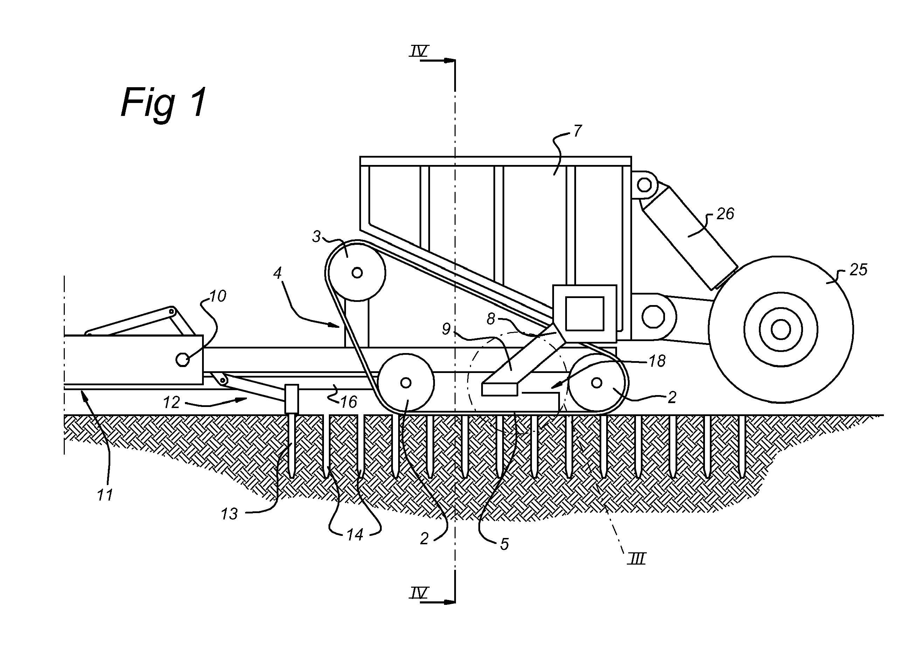

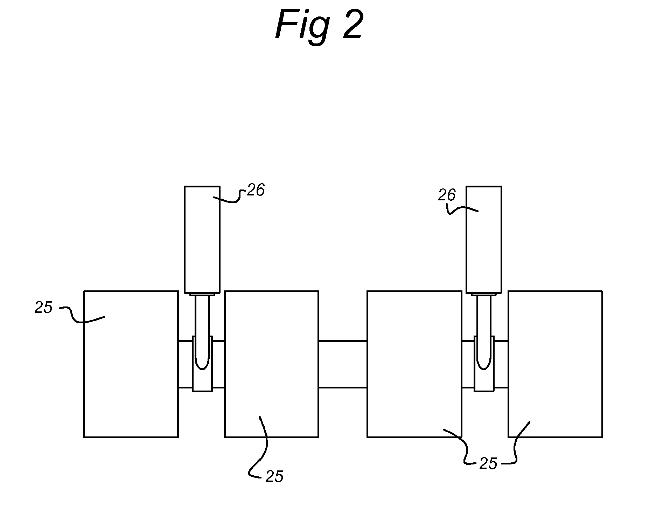

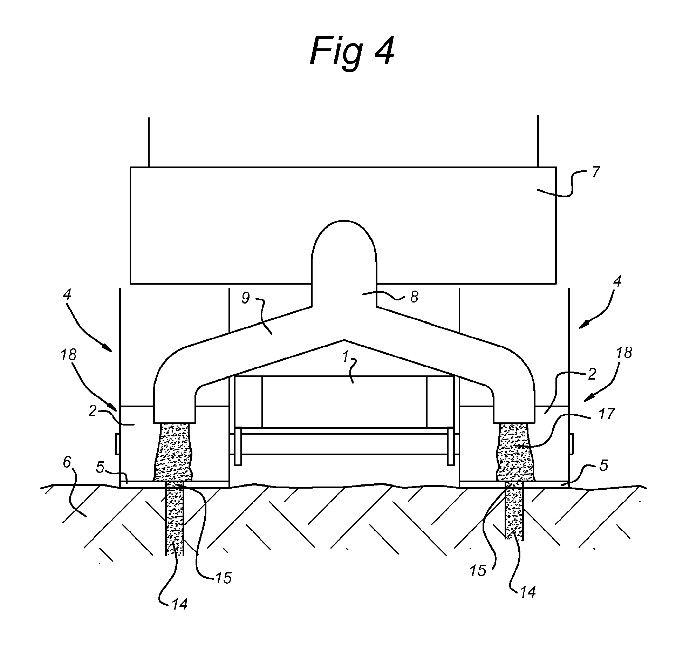

The device according to the invention illustrated in Fig. 1-4 comprises a frame 1 which has four supporting rollers 2, as well as two deflecting rollers 3. Two endless flexible elements 4 are guided around these rollers 2, 3. The bottom part 5 of these endless flexible elements 4 rests on the subsoil 6, in particular an area of turf. A storage container 7 is placed on the frame 1 which can accommodate an amount of granular material, in particular sand. An outlet 8 is connected to the storage container 7, which outlet 8, via the branched-off chutes 9, can pour the granular material onto the bottom parts 5 of the endless flexible elements 4.

The device according to the invention is coupled to a tractor 11 by means of a coupling 10, from which tractor 11 an installation 12 for producing ducts in the subsoil 6 is suspended. This installation 12, which is known per se and therefore will not be explained in any more detail, has a number of pins 13, for example 10-20 pins, which can be moved up and down in the subsoil 6 in order to create a number of evenly distributed ducts 14 therein.

The flexible elements 4 have a number of openings 15 which are evenly distributed in accordance with the pattern of the ducts 14. The bottom part 5 of the flexible elements 4 is positioned in such a manner that the openings 15 thereof are aligned with respect to the ducts 14. This is, for example, made possible by the power take-off 16 of the tractor 11 being coupled to the supporting rollers 2 in such a manner that the displacement of the device according to the invention is synchronized with the speed by which the pins 13 create the ducts 14.

Now, when filling the ducts 14 with a granular material, the following procedure is followed. The device according to the invention moves over the subsoil 6, preferably based on the speed of revolution of the power take-off of the tractor 11 and the speed with which the ducts 14 are created by means of the pins 13. At the same time, the granular material 17 is poured onto the bottom parts 5 of the flexible element 4 from the storage container 7 via the outlet 8 and the chutes 9. That part of the granular material 17 which falls precisely into the openings 15 already lands in the ducts 14. However, another part collects around the openings 15 on this bottom part 5.

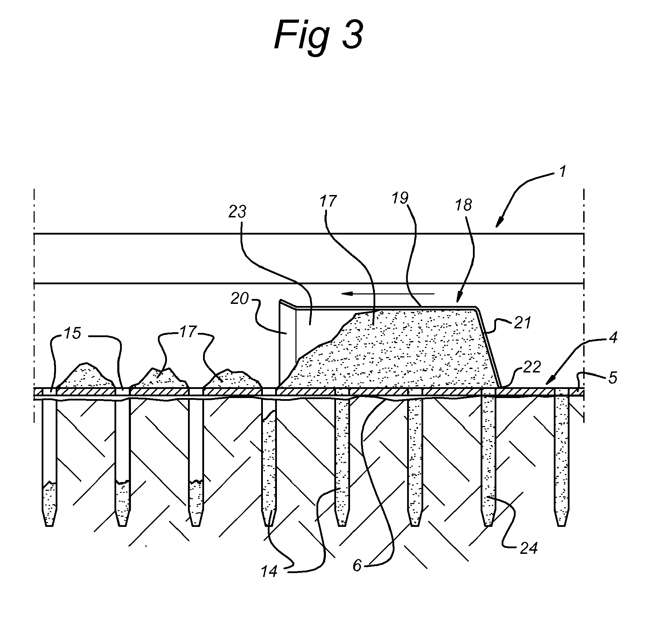

In order to be able to supply this granular material in a reliable manner to the openings 15, the sweeping element 18 which is shown on an enlarged scale in Figure 3 is provided. This sweeping element 18 (preferably one for each flexible element 4), which is illustrated in Figure 3 in longitudinal section, has a top wall 19, two side walls 20 (of which only one is shown in Fig. 3) as well as a rear wall 21. The bottom boundary 22 of these walls 19, 20 is adjacent to the top of the bottom part 5, or ends a short distance above the latter. The granular material which has collected on the bottom part 5 and not flowed away through the openings 15 will now end up in the interior space 23 of this sweeping element 18. The sweeping element 18, in particular the rear wall 21 thereof, now pushes this accumulated granular material over and past the openings 15, in such a manner that there is sufficient time for this material to flow into the ducts 14. As a result thereof, fillings 24 made from granular material can be formed in the ducts 14 in a reliable manner.

Auxiliary wheels 25 are additionally provided on the frame, which can be moved up and down with respect to the frame 1 by means of the hydraulic piston/cylinder devices 26. These auxiliary wheels 25 are lowered when the device according to the invention has to be moved and there is no need to carry out the method. When the device is in use, these auxiliary wheels 25 will however be moved up, so that only the bottom parts 5 of the endless elements 4 rest on the ground 6.

## Claims

1. Method for filling ducts (14) which open onto the surface of the ground (6), such as drainage ducts and/or aeration ducts in a field of grass, with a granular material (17), such as sand, comprising the steps of:
- providing a covering (4, 5) comprising openings (15),
- arranging the covering (4, 5) on the ground (6),
- producing ducts (14) in the ground (6),
- pouring granular material (17) onto the covering (4, 5),
- introducing the granular material (17) into the openings (15) in the covering (4, 5) so that it flows into the ducts (14).

2. Method according to Claim 1, comprising the step of:
- aligning the openings (15) with respect to the ducts (14).

3. Method according to Claim 1, comprising the step of:
- providing a covering (4, 5), the openings (15) of which are at a distance to one another which corresponds to the distance of the ducts (14) to one another.

4. Method according to one of the preceding claims, comprising the step of:
- moving the granular material (17) over the covering (4, 5) towards the openings (15).

5. Method according to one of the preceding claims, comprising the steps of:
- providing an endless covering (4) having a bottom part (5) and a top part,
- arranging the bottom part (5) on the ground (6),
- moving the covering (4) by rolling it over the ground (6).

6. Method according to Claim 5, comprising the steps of:
- providing at least two endless coverings (4) next to one another,
- distributing the granular material (17) over the bottom parts (5) of the coverings (4).

7. Method according to Claim 5 or 6, comprising the step of:
- carrying along an amount of granular material (17) while rolling the covering(s) (4).

8. Method according to one of the preceding claims, comprising the steps of:
- producing ducts (14) in the ground (6) at a regular distance from one another,
- immediately thereafter pouring granular material (17) into these ducts (14) via the covering (4, 5).

9. Device for carrying out the method according to one of the preceding claims, comprising a frame (1) which can be moved over the ground (6), covering means (4, 5) which are to be arranged on the ground (6), which covering means (4, 5) are provided with openings (15), positioning elements for arranging the covering means (4, 5) on the ground (6), a container (7) for carrying along an amount of granular material (17), such as sand, as well as supply means (8, 9) for supplying the granular material (17) from the container (7) to the covering means (4, 5), in such a way that the granular material (17) can leave the covering means (4, 5) via the openings (15).

10. Device according to Claim 9, wherein the covering means are designed as an endless flexible and/or jointed element (4), the bottom part (5) of which can be placed on the ground (6), and wherein the supply means (8, 9) are designed to supply the granular material (17) from the container (7) onto said bottom part (5) .

11. Device according to Claim 10, wherein at least two endless flexible and/or jointed elements (4) are provided next to one another, the bottom part (5) of each of which can be placed on the ground (6), and the supply means (8, 9) are designed to distribute the granular material (17) from the container (7) onto the bottom parts (5).

12. Device according to Claim 11, wherein each endless flexible and/or jointed element (4) is guided around at least two supporting rollers (2), and the frame (1) is supported by means of these supporting rollers (2).

13. Device according to Claim 11 or 12, wherein the supply means (8, 9) comprise a distributing element (9) which is provided with a central inlet (8) which is connected to the container (7) as well as at least two inlets (9) which extend in each case between the top and bottom parts (5) of the endless flexible and/or jointed elements (4).

14. Device according to one of Claims 10-13, wherein a sweeping element (18) is provided which can be displaced over the bottom part (5) for supplying the granular material (17) which has been poured thereon to the openings (15) in the bottom part (5).

15. Device according to Claim 14, wherein the sweeping element (18) is attached to the frame (1).

16. Device according to Claim 14 or 15, wherein the sweeping element (18) is designed as a hood provided with a top wall (19), side walls (20) and a rear wall (21) which, viewed in the direction of movement of the endless flexible element (4), adjoins the rear of said top wall (19) and side walls (20), the bottom sides (22) of which top wall (19), side walls (20) and rear wall (21) are closely adjacent to and/or end at a small distance above the bottom part (5).

17. Device according to one of Claims 10-16, wherein the front of the frame (1) is provided with coupling means (10) which can be coupled to a tractor (11) or the like.

18. Device according to Claim 17, to the extent that it is dependent on one of Claims 10-16, wherein the endless flexible element (4) can be driven by means of a torsion axle, which torsion axle can be coupled to the power take-off (16) of the tractor (11).

19. Device according to Claim 17 or 18, wherein the tractor (11) carries a device (12) for producing evenly distributed ducts (14) in the ground (6).

20. Device according to one of Claims 10-19, wherein auxiliary wheels (25) are provided which are attached to the frame (1) in such a manner that they can be moved up and down, by means of which auxiliary wheels (25) the frame (1) can be moved without the bottom part (5) of the endless elements (4) touching the ground (6).
